# EUROPEAN PATENT APPLICATION

(11) **EP 3 916 878 A1**
(43) Date of publication of application: **01.12.2021**
(21) Application number: 20864324.7
(22) Date of filing: 31.03.2020
(51) Int. Cl.: H01M 10/0587, H01M 10/04

(54) **CELL, BATTERY, AND ELECTRONIC DEVICE**

(71) Applicant: Ningde Amperex Technology Ltd., Ningde City, Fujian 352100 (CN)
(72) Inventor: HU, Dongge, Ningde Fujian 350900 (CN); YUAN, Jielin, Ningde Fujian 350900 (CN); WANG, Tao, Ningde Fujian 350900 (CN); WU, Fei, Ningde Fujian 350900 (CN)
(74) Representative: Icosa
(86) International application number: PCT/CN2020/082272
(87) International publication number: WO 2021/195917

(57) **Abstract**

This application provides a battery cell, including an electrode assembly and a package accommodating the electrode assembly. The electrode assembly includes a first assembly and a second assembly. The first assembly includes a first electrode plate and a second electrode plate that are stacked. The second assembly includes a third electrode plate and a fourth electrode plate that are stacked. The electrode assembly includes a first main body portion and a second main body portion connected to the first main body portion. The first assembly and the second assembly are stacked and then wound to form the first main body portion and the second main body portion. In a thickness direction of the electrode assembly, a thickness of the first main body portion is greater than a thickness of the second main body portion. In the foregoing battery cell, the first assembly and the second assembly are stacked and then wound to form a first main body portion and a second main body portion that differ in thickness, thereby simplifying a manufacturing process of a special-shaped battery cell, effectively improving production efficiency, and reducing production costs. This application further provides a battery that contains the battery cell, and an electronic device.

## Description

### TECHNICAL FIELD

This application relates to the field of batteries, and in particular, to a battery cell, a battery containing the battery cell, and an electronic device.

### BACKGROUND

To use space of a device more efficiently and provide higher energy, a good solution is to use a special-shaped battery in the device. This can make full use of remaining space in the device and increase an energy density of the battery.

Currently, a special-shaped battery cell is usually manufactured by using electrode assembly stacking technology. Specifically, in a process of stacking each electrode assembly, different types of electrode plates need to be stacked layer by layer. This method is inefficient and leads to a relatively high manufacturing cost.

### SUMMARY

In view of the foregoing situation, it is necessary to provide a special-shaped battery that is easy to manufacture, a battery that contains the battery cell, and an electronic device.

An embodiment of this application provides a battery cell, including an electrode assembly and a package accommodating the electrode assembly. The electrode assembly includes a first assembly and a second assembly. The first assembly includes a first electrode plate and a second electrode plate. The first electrode plate and the second electrode plate are stacked. In a width direction of the first assembly, the first assembly includes a first lateral edge and a second lateral edge opposite to the first lateral edge. The second assembly includes a third electrode plate and a fourth electrode plate. The third electrode plate and the fourth electrode plate are stacked. The electrode assembly includes a first main body portion and a second main body portion connected to the first main body portion. The first assembly and the second assembly are stacked and then wound to form the first main body portion and the second main body portion. In a thickness direction of the electrode assembly, a thickness of the first main body portion is greater than a thickness of the second main body portion.

In an optional embodiment, a width of the first assembly is greater than a width of the second assembly. The second assembly is disposed on a surface of the first assembly. In a width direction of the first assembly, the first assembly includes a first lateral edge and a second lateral edge opposite to the first lateral edge. A lateral edge of the second assembly, which is opposite to the first lateral edge, is flush with the first lateral edge, or a lateral edge of the second assembly, which is opposite to the second lateral edge, is flush with the second lateral edge, or the second assembly is disposed between the first lateral edge and the second lateral edge.

Further, the first assembly and the second assembly are sequentially stacked and then wound to form the first main body portion. In a thickness direction of the first assembly, a part of the first assembly, which does not overlap the second assembly, is wound to form the second main body portion.

In an optional embodiment, the electrode assembly further includes a third assembly. The third assembly includes a fifth electrode plate and a sixth electrode plate. The fifth electrode plate and the sixth electrode plate are stacked. A width of the first assembly is greater than a width of the second assembly and greater than a width of the third assembly. The third assembly is disposed on a surface of the first assembly. The third assembly and the second assembly are spaced apart in a width direction of the first assembly. The first assembly, the separator, and the third assembly are sequentially stacked and then wound to form a third main body portion. A thickness of the third main body portion is greater than the thickness of the second main body portion.

In an optional embodiment, in a length direction of the first assembly, the first assembly includes a third lateral edge and a fourth lateral edge opposite to the third lateral edge. In a winding direction of the electrode assembly, the third lateral edge and/or the fourth lateral edge of the first assembly serve as a winding initiation end. The winding initiation end and the second assembly are stacked and then wound together to form the first main body portion. A part of unwound first assembly and the second assembly are stacked to form the second main body portion.

Further, the third lateral edge and the fourth lateral edge of the first assembly serve as a first winding initiation end and a second winding initiation end respectively. A winding direction of the first winding initiation end is opposite to a winding direction of the second winding initiation end.

In an optional embodiment, the third lateral edge and the fourth lateral edge of the first assembly serve as a first winding initiation end and a second winding initiation end respectively. A winding direction of the first winding initiation end is identical to a winding direction of the second winding initiation end.

In an optional embodiment, the electrode assembly further includes a tab. The tab is electrically connected to the first main body portion and/or the second main body portion, and extends in a direction away from the electrode assembly.

An embodiment of this application further provides a battery, including a battery cell and a housing that accommodates the battery cell. The battery cell includes any one of the foregoing battery cells.

An embodiment of this application further provides an electronic device, including any one of the foregoing batteries and a circuit element electrically connected to the battery.

In the foregoing battery cell, the first assembly and the second assembly are stacked and then wound to form a first main body portion and a second main body portion that differ in thickness, thereby simplifying a manufacturing process of a special-shaped battery cell, replacing the existing practice of manufacturing a special-shaped battery cell by stacking, effectively improving production efficiency, and reducing production costs.

### BRIEF DESCRIPTION OF DRAWINGS

FIG. 1 is a schematic diagram of an expanded structure of an electrode assembly of a battery cell according to a first embodiment;
FIG. 2 is a schematic structural diagram of a battery cell according to a first embodiment;
FIG. 3 is a schematic diagram of an expanded structure of an electrode assembly according to an extended embodiment;
FIG. 4 is a schematic structural diagram of a battery cell according to an extended embodiment;
FIG. 5 is a schematic diagram of an expanded structure of an electrode assembly according to another extended embodiment;
FIG. 6 is a schematic structural diagram of a battery cell according to another extended embodiment;
FIG. 7 is a schematic diagram of an expanded structure of an electrode assembly according to a second embodiment;
FIG. 8 is a schematic structural diagram of a battery cell according to a second embodiment;
FIG. 9 is a schematic structural diagram of a battery cell according to a third embodiment;
FIG. 10 is a schematic structural diagram of a battery cell according to an extended embodiment of the third embodiment;
FIG. 11 is a schematic structural diagram of a battery cell according to a fourth embodiment;
FIG. 12 is a schematic structural diagram of a battery cell according to a fifth embodiment;
FIG. 13 is a structural block diagram of a battery according to an embodiment; and
FIG. 14 is a structural block diagram of an electronic device according to an embodiment.

### Reference numerals:

| | |
|---|---|
| Battery cell | 100 |
| First end | 101 |
| Second end | 102 |
| Electrode assembly | 10 |
| First assembly | 11 |
| First electrode plate | 111 |
| Second electrode plate | 112 |
| First lateral edge | 113 |
| Second lateral edge | 114 |
| Third lateral edge | 115 |
| Fourth lateral edge | 116 |
| Second assembly | 12 |
| Third electrode plate | 121 |
| Fourth electrode plate | 122 |
| First main body portion | 13 |
| Second main body portion | 14 |
| Tab | 15 |
| Third assembly | 16 |
| Fifth tab | 161 |
| Sixth tab | 162 |
| Third main body portion | 17 |
| Battery | 200 |
| Housing | 201 |
| Electronic device | 300 |
| Circuit element | 301 |

### DETAILED DESCRIPTION OF EMBODIMENTS

The following clearly and fully describes the technical solutions in the embodiments of this application with reference to the drawings hereof. Apparently, the described embodiments are merely a part of but not all of the embodiments of this application. All other embodiments derived by a person of ordinary skill in the art based on the embodiments of this application without making any creative efforts shall fall within the protection scope of this application.

It needs to be noted that an element referred to as being "fixed to" another element may directly exist on the other element or may be fixed to the other element through an intermediate element. An element considered to be "connected to" another element may be directly connected to the other element or may be connected to the other element through an intermediate element. An element considered to be "disposed on" another element may be directly disposed on the other element or may be disposed on the other element through an intermediate element. The terms "vertical", "horizontal", "left", "right" and similar expressions used herein are merely for ease of description.

Unless otherwise defined, all technical and scientific terms used herein have the same meanings as usually understood by a person skilled in the technical field of this application. The terms used in the specification of this application herein are merely intended for describing specific embodiments but are not intended to limit this application. The term "and/or" used herein is intended to include any and all combinations of one or more related items preceding and following the term.

An embodiment of this application provides a battery cell, including an electrode assembly and a package accommodating the electrode assembly. The electrode assembly includes a first assembly and a second assembly. The first assembly includes a first electrode plate and a second electrode plate. The first electrode plate and the second electrode plate are stacked. In a width direction of the first assembly, the first assembly includes a first lateral edge and a second lateral edge opposite to the first lateral edge. The second assembly includes a third electrode plate and a fourth electrode plate. The third electrode plate and the fourth electrode plate are stacked. The electrode assembly includes a first main body portion and a second main body portion connected to the first main body portion. The first assembly and the second assembly are stacked and then wound to form the first main body portion and the second main body portion. In a thickness direction of the electrode assembly, a thickness of the first main body portion is greater than a thickness of the second main body portion.

In the foregoing battery cell, the first assembly and the second assembly are stacked and then wound to form a first main body portion and a second main body portion that differ in thickness, thereby simplifying a manufacturing process of a special-shaped battery cell, replacing the existing practice of manufacturing a special-shaped battery cell by stacking, effectively improving production efficiency, and reducing production costs.

The following describes some embodiments of this application in detail. To the extent that no conflict occurs, the following embodiments and the features in the embodiments may be combined with each other.

### First Embodiment

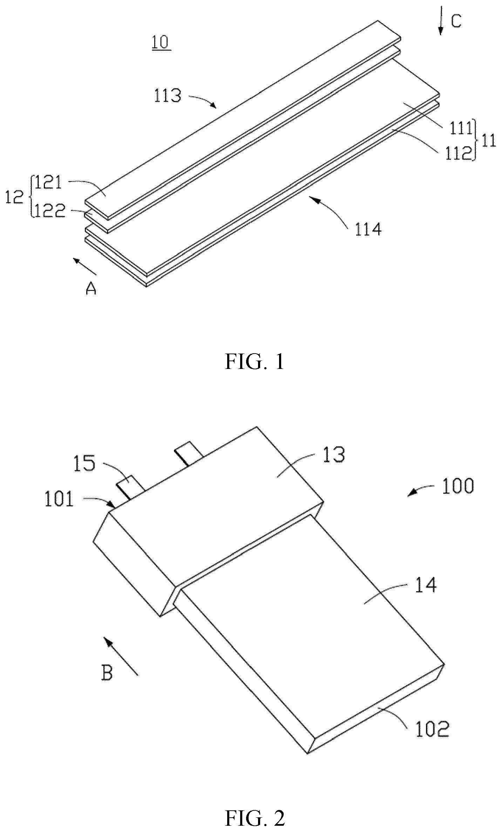

Referring to FIG. 1 and FIG. 2, the battery cell 100 includes an electrode assembly 10 and a package accommodating the electrode assembly 10. The electrode assembly 10 includes a first assembly 11 and a second assembly 12. The first assembly 11 includes a first electrode plate 111 and a second electrode plate 112 that have polarities opposite to each other. The first electrode plate 111 and the second electrode plate 112 are stacked. In a width direction (a direction indicated by an arrow A in FIG. 1) of the first assembly 11, the first assembly includes a first lateral edge 113 and a second lateral edge 114 opposite to the first lateral edge. The second assembly 12 includes a third electrode plate 121 and a fourth electrode plate 122 that have polarities opposite to each other. The third electrode plate 121 and the fourth electrode plate 122 are stacked. The electrode assembly 10 includes a first main body portion 13 and a second main body portion 14 connected to the first main body portion 13. The first assembly 11 and the second assembly 12 are stacked and then wound to form the first main body portion 13 and the second main body portion 14. In a thickness direction of the electrode assembly 10, that is, in a stacking direction of the first assembly 11 and the second assembly 12, a thickness of the first main body portion 13 is greater than a thickness of the second main body portion 14.

To avoid a short circuit, a separator is disposed between the first electrode plate 111 and the second electrode plate 112. The first electrode plate 111, the separator, and the second electrode plate 112 are stacked sequentially to form the first assembly 11. A separator may be disposed between the third electrode plate 121 and the fourth electrode plate 122. The third electrode plate 121, the separator, and the fourth electrode plate 122 are stacked sequentially to form the second assembly 12. In other embodiments, a separator may be disposed between the first assembly 11 and the second assembly 12. The first assembly 11, the separator, and the second assembly 12 are stacked sequentially and then wound. Understandably, in other embodiments, a separator may be disposed between outer surfaces of electrode plates. The package wraps an outer surface of the electrode assembly 10 to seal the electrode assembly 10.

Further, a width of the first assembly 11 is greater than a width of the second assembly 12, and the second assembly 12 is disposed on a surface of the first assembly 11. In a width direction of the first assembly 11, a lateral edge of the second assembly 12, which is opposite to the first lateral edge 113, is flush with the first lateral edge 113. The first assembly 11, the separator, and the second assembly 12 are stacked sequentially and then wound to form the first main body portion 13. In a thickness direction of the first assembly 11, a part of the first assembly 11, which does not overlap the second assembly 12, is wound to form the second main body portion 14. In a length direction (a direction indicated by an arrow B in FIG. 2) of the battery cell 100, the battery cell 100 has a first end 101 and a second end 102 disposed opposite to each other. The first main body portion 13 is located at the first end 101 of the battery cell 100. The electrode assembly 10 further includes a tab 15. The tab 15 is electrically connected to the first main body portion 13 and/or the second main body portion 14, and extends in a direction away from the electrode assembly 10. In this embodiment of this application, two tabs 15 extend out of the first end 101. In other embodiments, the tabs 15 may be plural in number, and may extend out of different positions of the battery cell 100 respectively. This application is not limited thereto.

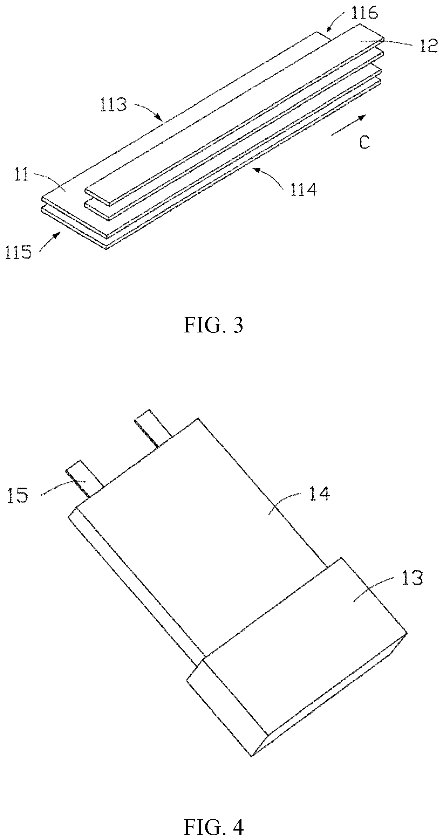

Referring to FIG. 3 and FIG. 4, in an extended embodiment, the lateral edge of the second assembly 12, which is opposite to the second lateral edge 114, is flush with the second lateral edge 114, so that the first main body portion 13 is located at the second end 102.

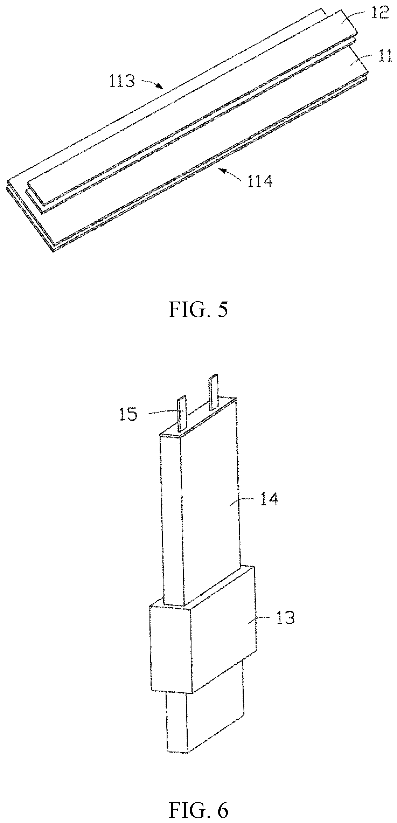

Referring to FIG. 5 and FIG. 6, in another extended embodiment, the second assembly 12 is disposed between the first lateral edge 113 and the second lateral edge 114. In this case, the first main body portion 13 is located between the first end 101 and the second end 102. Understandably, depending on a shape and space of a battery compartment in practical applications, relative positions between the first assembly 11 and the second assembly 12 in this application may also be configured in other manners. This application is not limited thereto.

### Second Embodiment

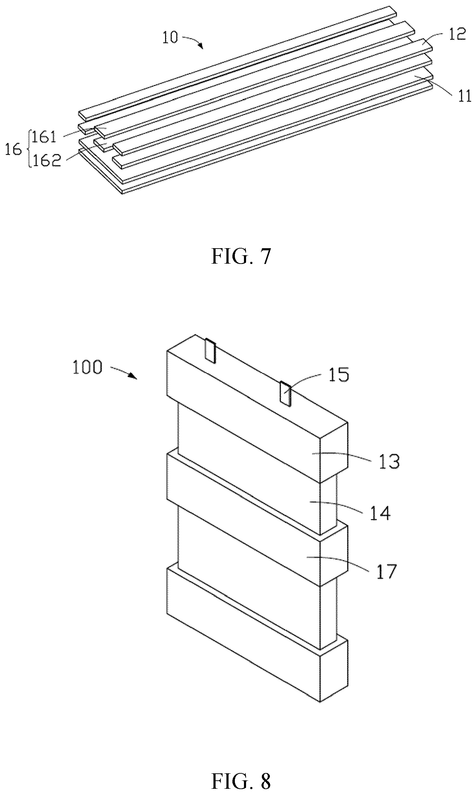

Referring to FIG. 7 and FIG. 8, a battery cell 100 in a second embodiment is almost identical to that in the first embodiment, but differs in: in the second embodiment, the electrode assembly 10 further includes a third assembly 16. The third assembly 16 includes a fifth electrode plate 161 and a sixth electrode plate 162 that have polarities opposite to each other. The fifth electrode plate 161 and the sixth electrode plate 162 are stacked. Further, a separator may be disposed between the fifth electrode plate 161 and the sixth electrode plate 162 to avoid short circuits.

A width of the first assembly 11 is greater than a width of the second assembly 12 and greater than a width of the third assembly 16. The third assembly 16 is disposed on the surface of the first assembly 11. The third assembly 16 and the second assembly 12 are spaced apart in the width direction of the first assembly 11. The first assembly 11, the separator, and the third assembly 16 are sequentially stacked and then wound to form a third main body portion 17. A thickness of the third main body portion 17 is greater than the thickness of the second main body portion 14.

In other embodiments, the electrode assembly 10 may further include a fourth assembly, a fifth assembly, and the like, so that the electrode assembly 10 includes a plurality of main body portions to meet a plurality of production requirements.

### Third Embodiment

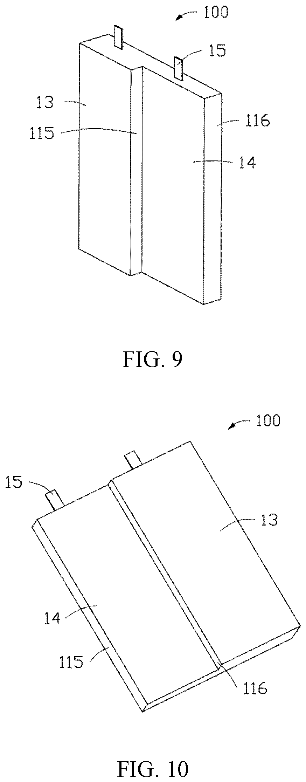

Referring to FIG. 9, a battery cell 100 in the third embodiment is almost identical to that in the first embodiment, but differs in that the first assembly 11 includes a third lateral edge 115 and a fourth lateral edge 116 opposite to the third lateral edge 115 in a length direction (a direction indicated by an arrow C in FIG. 3) of the first assembly. The third lateral edge 115 and the fourth lateral edge 116 are disposed between the first lateral edge 113 and the fourth lateral edge 114 separately. In a winding direction of the electrode assembly 10, the third lateral edge 115 of the first assembly 11 serves as a winding initiation end. The winding initiation end and the second assembly 12 are stacked and then wound together to form the first main body portion 13. A part of unwound first assembly 11 and the second assembly 12 are stacked to form the second main body portion 14. In the third embodiment, the length and width of the first assembly 11 are identical to those of the second assembly 12.

Referring to FIG. 10, in an extended embodiment, the fourth lateral edge 116 may also serve as a winding initiation end, so that the first main body portion 13 exchanges positions with the second main body portion 14 to meet different production requirements.

### Fourth Embodiment

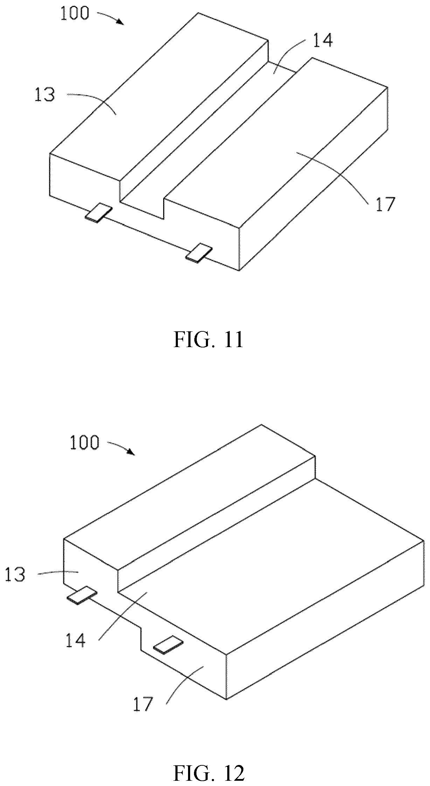

Referring to FIG. 11, a battery cell 100 in a fourth embodiment is almost identical to that in the third embodiment, but differs in: in the fourth embodiment, the third lateral edge 115 and the fourth lateral edge 116 of the first assembly 11 serve as a first winding initiation end and a second winding initiation end respectively. A winding direction of the first winding initiation end is identical to a winding direction of the second winding initiation end. The third lateral edge 115 is wound to form the first main body portion 13, and the fourth lateral edge is wound to form the third main body portion 17. The first main body portion 13 and the third main body portion 17 are interspaced, and an unwound part between the first main body portion 13 and the third main body portion 17 is the second main body portion 14. Due to an identical winding direction, protrusion directions of the first main body portion 13 and the third main body portion 17 in the thickness direction of the electrode assembly 10 are identical.

### Fifth Embodiment

Referring to FIG. 12, a battery cell 100 in a fifth embodiment is almost identical to that in the third embodiment, but differs in: in the fifth embodiment, the third lateral edge 115 and the fourth lateral edge 116 of the first assembly 11 serve as a first winding initiation end and a second winding initiation end respectively. A winding direction of the first winding initiation end is opposite to a winding direction of the second winding initiation end. The third lateral edge 115 is wound to form the first main body portion 13, and the fourth lateral edge is wound to form the third main body portion 17. The first main body portion 13 and the third main body portion 17 are interspaced, and an unwound part between the first main body portion 13 and the third main body portion 17 is the second main body portion 14. Due to opposite winding directions, protrusion directions of the first main body portion 13 and the third main body portion 17 in the thickness direction of the electrode assembly 10 are opposite.

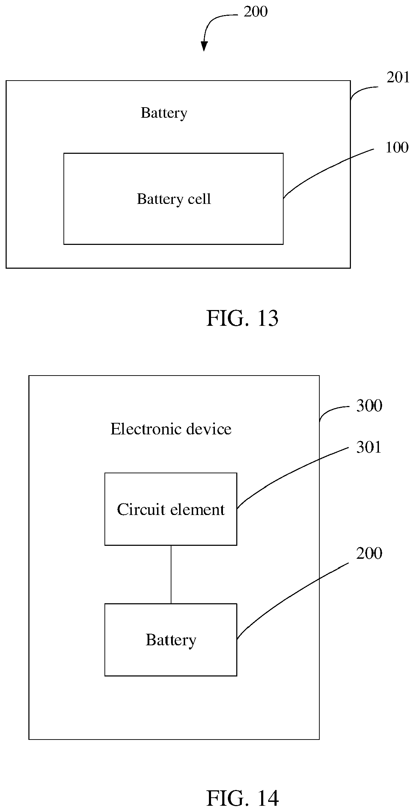

Referring to FIG. 13, an embodiment of this application further provides a battery 200, including a battery cell and a housing 201 that accommodates the battery cell. The battery cell includes the battery cell 100 according to any one of or any combination of the foregoing embodiments.

Further, referring to FIG. 14, this application provides an electronic device 300, including a battery and a circuit element 301 electrically connected to the battery. The battery includes the battery 200.

The foregoing embodiments are merely intended for describing the technical solutions of this application but not intended as a limitation. Although this application is described in detail with reference to the foregoing optional embodiments, a person of ordinary skill in the art understands that modifications or equivalent substitutions may be made to the technical solutions of this application without departing from the spirit and scope of the technical solutions of this application.

## Claims

1. A battery cell, comprising an electrode assembly and a package accommodating the electrode assembly, wherein the electrode assembly comprises:
a first assembly, comprising a first electrode plate and a second electrode plate, wherein the first electrode plate and the second electrode plate are stacked; and
a second assembly, comprising a third electrode plate and a fourth electrode plate, wherein the third electrode plate and the fourth electrode plate are stacked; and
the electrode assembly comprises a first main body portion and a second main body portion connected to the first main body portion, the first assembly and the second assembly are stacked and then wound to form the first main body portion and the second main body portion, and in a thickness direction of the electrode assembly, a thickness of the first main body portion is greater than a thickness of the second main body portion.

2. The battery cell according to claim 1, wherein a width of the first assembly is greater than a width of the second assembly, and the second assembly is disposed on a surface of the first assembly;
in a width direction of the first assembly, the first assembly comprises a first lateral edge and a second lateral edge opposite to the first lateral edge; and,
a lateral edge of the second assembly, which is opposite to the first lateral edge, is flush with the first lateral edge, or a lateral edge of the second assembly, which is opposite to the second lateral edge, is flush with the second lateral edge, or the second assembly is disposed between the first lateral edge and the second lateral edge.

3. The battery cell according to claim 2, wherein the first assembly and the second assembly are sequentially stacked and then wound to form the first main body portion, and, in a thickness direction of the first assembly, a part of the first assembly, which does not overlap the second assembly, is wound to form the second main body portion.

4. The battery cell according to claim 1, wherein the electrode assembly further comprises a third assembly, the third assembly comprises a fifth electrode plate and a sixth electrode plate, the fifth electrode plate and the sixth electrode plate are stacked, a width of the first assembly is greater than a width of the second assembly and greater than a width of the third assembly;
the third assembly is disposed on a surface of the first assembly, the third assembly and the second assembly are spaced apart in a width direction of the first assembly; and
the first assembly, the separator, and the third assembly are sequentially stacked and then wound to form a third main body portion, and a thickness of the third main body portion is greater than the thickness of the second main body portion.

5. The battery cell according to claim 1, wherein, in a length direction of the first assembly, the first assembly comprises a third lateral edge and a fourth lateral edge opposite to the third lateral edge;
in a winding direction of the electrode assembly, the third lateral edge and/or the fourth lateral edge of the first assembly serve as a winding initiation end; and
the winding initiation end and the second assembly are stacked and then wound together to form the first main body portion, a part of unwound the first assembly and the second assembly are stacked to form the second main body portion.

6. The battery cell according to claim 5, wherein the third lateral edge and the fourth lateral edge of the first assembly serve as a first winding initiation end and a second winding initiation end respectively, and a winding direction of the first winding initiation end is opposite to a winding direction of the second winding initiation end.

7. The battery cell according to claim 5, wherein the third lateral edge and the fourth lateral edge of the first assembly serve as a first winding initiation end and a second winding initiation end respectively, and a winding direction of the first winding initiation end is identical to a winding direction of the second winding initiation end.

8. The battery cell according to claim 1, wherein the electrode assembly further comprises a tab, and the tab is electrically connected to the first main body portion and/or the second main body portion, and extends in a direction away from the electrode assembly.

9. A battery, comprising a battery cell and a housing that accommodates the battery cell, wherein the battery cell comprises the battery cell according to any one of claims 1 to 8.

10. An electronic device, comprising a battery and a circuit element electrically connected to the battery, wherein the battery comprises the battery according to claim 9.
